# EUROPEAN PATENT APPLICATION

(11) **EP 1 829 446 A2**
(43) Date of publication of application: **05.09.2007**
(21) Application number: 07103522.4
(22) Date of filing: 05.03.2007
(51) Int. Cl.: A01G 9/08

(54) **Assembly for placing cuttings in plant plugs**

(30) Priority: 03.03.2006 NL 1031300
(71) Applicant: Provice B.V., 2861 AS Bergambacht (NL)
(72) Inventor: Schouten, Johan Jan, 5307 HJ, Poederoijen (NL)
(74) Representative: Swinkels, Bart Willem

(57) **Abstract**

Assembly for placing a cutting (16), such as a tree cutting, in a plant plug (21). A group of cuttings (16) are placed on a supply conveyor (1) and arranged at a regular distance from one another. Individual cuttings (16) are gripped by one of the arms of a rotating device by means of underpressure and transferred to a belt provided with grippers (26). This transfer movement takes place continually and in a rotating manner. By executing such a rotating movement, it is possible to achieve a high capacity. After having been gripped by the gripping means on the belt, the cuttings (16) are displaced over a short distance and arranged in the respective plant plug (21) which is preferably arranged in a tray which is situated on a discharge conveyor.

## Description

The present invention relates to an assembly for placing cuttings in plant plugs, comprising a supply for cuttings, a first device for gripping the individual cuttings and placing them in a second device for transferring the individual cuttings from the first device and positioning them in a plant plug.

An assembly of this type is generally known in the prior art. Therein cuttings are supplied on a belt and transferred to the second device with grippers which form the first device, following which they are placed in plant plugs. Such grippers carry out a reciprocating movement. Plants, such as cuttings, are thus subjected to a relatively fast acceleration after pick-up and during transfer to the second device a corresponding deceleration takes place. As ever higher throughputs are aimed for, there is increasingly less time for transferring the cuttings. It is possible to solve this problem by arranging a large number of first devices next to one another. However, this significantly increases the price of the system according to the present invention while the plants are subjected to a considerable strain.

It is the object of the present invention to prevent this drawback.

This drawback is removed in an above-described assembly in that said first device comprises a gripping device which moves only in one direction according to a closed ring.

According to the present invention, transfer to the second device no longer takes place by means of a reciprocating movement, but rather a first device is designed according to the invention in such a manner that a continuous displacement is achieved. Such a continuous displacement may comprise a rotating movement in which cuttings are continually being transferred from the supply conveyor to the second device via the first device. A considerable increase in capacity can be achieved without further special measures. A further increase is possible, according to a preferred embodiment of the invention if the first device according to the invention is provided with gripper/release heads. Gripping/releasing may be effected in any way known in the prior art.

According to a particular embodiment of the invention, all this is effected with gripping fingers, with gripping being effected by fingers located opposite one another and moving towards one another. The device according to the present invention may be composed of a number of arms, each arm being provided with a gripper head which can be manoeuvred relative thereto. This gripper head may be provided with gripping fingers. It is also possible to use underpressure, optionally in combination with gripping fingers, for engaging the plants. In another variant, recesses, such as small blocks with openings, may be used to pick up the plant without damaging it.

According to a particular embodiment of the invention, it is possible, if a number of arms are present, for these to be translatable separately or collectively with respect to the longitudinal direction of the axis of rotation of the first device.

Upstream of the device for gripping the plants, a device may be arranged for separating the cuttings from a group of cuttings. Such a device may comprise a rotating set of arms provided with holes for passing through underpressure/overpressure for gripping/discarding a cutting.

The second device, that is to say the device to which the cuttings are passed by the first device, may comprise a belt or another moving means to which grippers are attached which, on the one hand, receive the plants from the first device and subsequently position the plants over the plugs. These plant plugs may optionally be provided with an opening which has been preproduced. According to a particular embodiment of the invention, a number of first devices according to the invention are arranged one behind the other, preferably over a supply conveyor. Each device is provided with a second device which in turn extends over a discharge conveyor on which, for example, a tray is moved with a large number of plant plugs. In this manner, the various plant plugs in a tray can be successively filled by successive second devices. As a result thereof, the movement speed of the tray can be selected to be relatively low, while still achieving a high output with regard to the filling operation. If desired, sorting may be carried out.

The invention can, in particular, be used for handling tree cuttings. It should be understood that it is also possible to displace other cuttings using the device according to the present invention. Chrysanthemums and other plants are mentioned by way of example.

During the rotating movement by means of the first device, it is possible to treat the cuttings. Thus, it is possible to provide the cuttings with a growth-enhancing agent or treat them in another way. According to a further embodiment of the invention, sensor means are provided which detect the presence of a cutting in the vicinity of the first device and subsequently activate the first device. Such sensor means may comprise a light barrier, but are preferably in the form of camera means for positioning the gripper head with fingers. Operation of the grippers of the second device can be achieved by means of operating means which are arranged near the latter in a stationary manner.

The invention also relates to a method for placing cuttings in plant plugs, comprising providing a group of cuttings, conveying said cuttings while increasing the distance between them, engaging individual cuttings, displacing the latter into a position over said plant plugs and placing them in said plant plugs, wherein gripping and displacing said individual cuttings comprises engaging a first cutting and displacing it, with a subsequent cutting being engaged during the displacement of this first cutting.

The invention also relates to a particular embodiment of a separator which may optionally be used in combination with the above-described device. This separator comprises a supply conveyor and a discharge conveyor. At the transition between the supply conveyor and the discharge conveyor is an air gap which extends substantially over the area in which plants or the like are situated, through which air gap air is blown. Plants, which move from the supply conveyor to the discharge conveyor, are subjected to the effect of the air emerging from the gap at the transition. If two or more plants are stuck together or are entangled, these plants will be separated as a result of the air, in order to ensure that the plants on the discharge conveyor are all separate from one another.

The invention also relates to a method for separating plants. In this case, the plants are supplied on a supply conveyor and carried away by means of a discharge conveyor. At the transition between the supply conveyor and the discharge conveyor, these plants are subjected to a stream of gas. This stream of gas preferably comprises a stream of air which is substantially directed in the conveying direction of the plants and extends over the width of the "trail" of plants on the supply conveyor/discharge conveyor.

Further details of the present invention will become clear from the description of the preferred embodiment of the invention illustrated in the drawing, in which:
Fig. 1 shows the assembly according to the present invention with a first embodiment of the first device;
Fig. 2 shows a detail of the first device according to Figure 1;

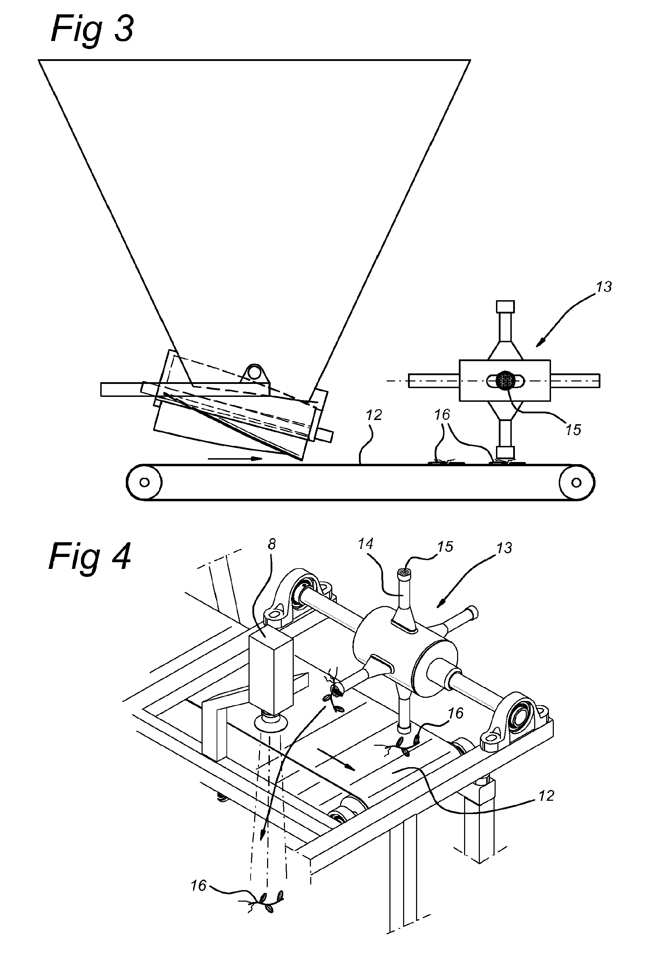

Fig. 3 shows the supply hopper with a part of the ancillary conveyor;
Fig. 4 shows the separator;

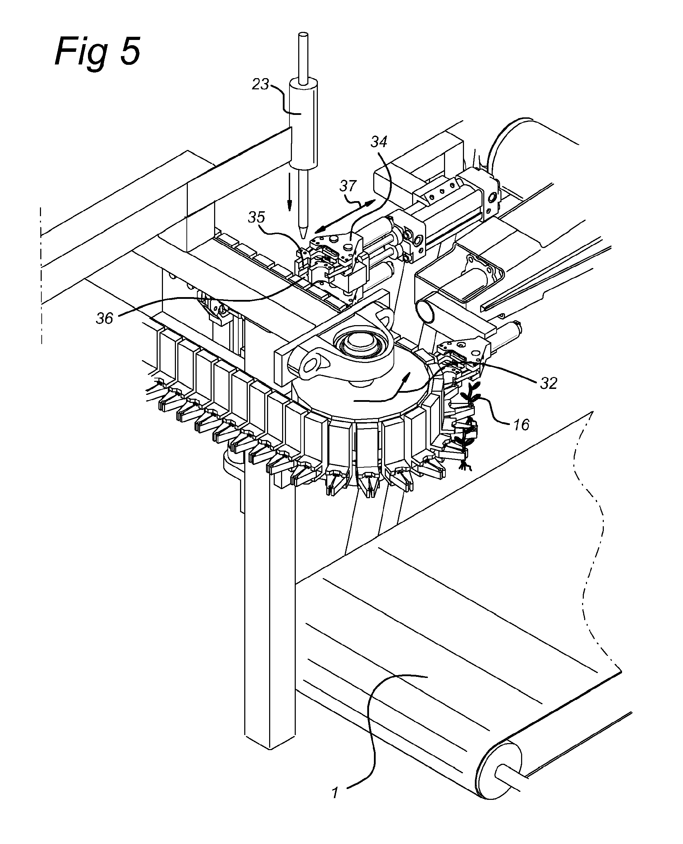

Fig. 5 shows a detail of the first device according to the preceding figures and a cutting device;
Fig. 6 diagrammatically shows a second embodiment of the first device;
Fig. 7 shows a detail of the device according to Fig. 6 and
Fig. 8 shows an embodiment of a separator.

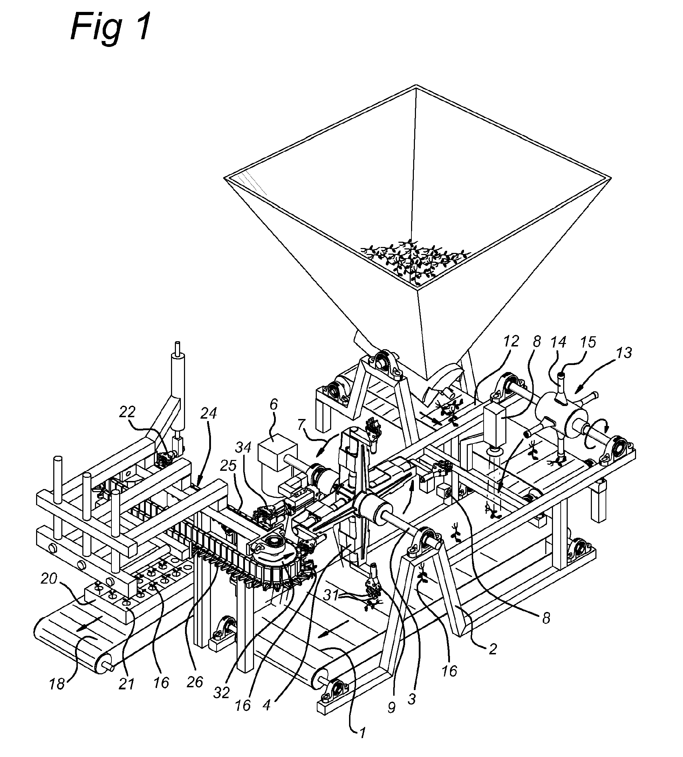

In Fig. 1, reference numeral 1 denotes a supply conveyor for cuttings, such as tree cuttings. Upstream thereof, an ancillary conveyor 12 is arranged, by means of which the cuttings are taken onto the supply conveyor 1 via the separator 13. Separator 13 is positioned on either the supply conveyor 1 or the ancillary conveyor 12. The separator 13 is provided with arms 14 which are provided with a cavity 15 for engaging in each case one cutting by means of underpressure and discarding it by means of overpressure. If there is an accumulation of cuttings, in each case one cutting is picked up by the respective arm 14 and deposited on the other side of the roller on the supply conveyor. Thus, the cuttings are arranged at a fixed distance. It is also possible to use a vibrating table/plate instead of the supply means illustrated.

Reference numeral 2 denotes a frame in which a shaft 3 provided with a number of arms 4 having gripper/release heads 9 at their ends is arranged. The device is rotatable in the direction of arrow 7 and a motor 6 is provided in order to achieve this rotation. Gripper head 9 with arm 36 is rotatable about arm 4 and can also rotate with respect to arm 36. At its end, it is provided with gripping fingers 31.

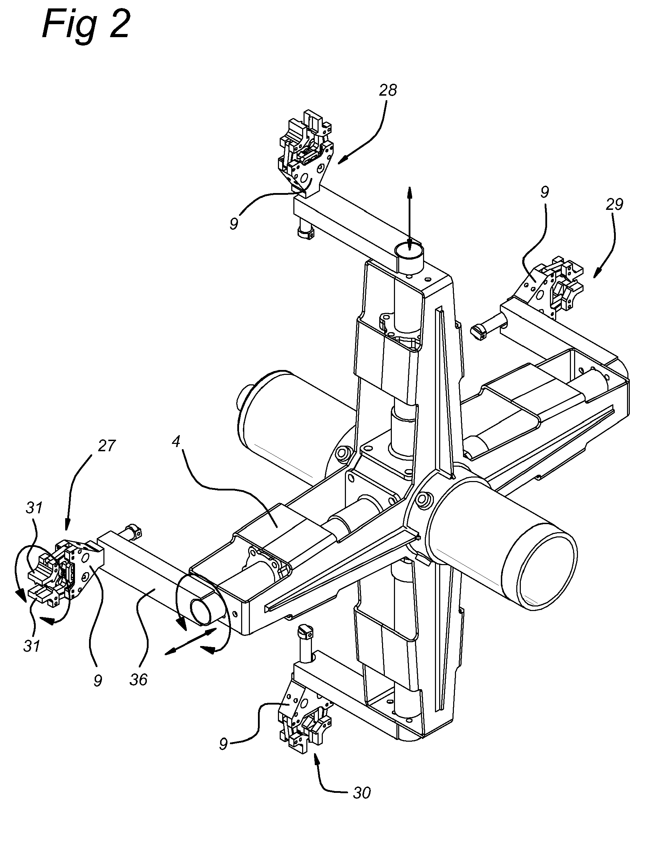

If a cutting is situated under the vertically downwardly directed gripper/release head 9, this is detected by the camera 8, which determines the position of the cutting on the belt. In a manner which is not illustrated in any more detail, the gripping fingers 31 of the respective gripper/release head become effective for engaging the cutting 16 in question. Simultaneously, the device executes a rotating movement in the direction of arrow 7, as a result of which the cutting ends up in the position in front of the second device or dispensing conveyor 24, following a rotation about approximately 90 degrees. The dispensing conveyor 24 comprises a belt 25 on which a number of grippers 26 are arranged which can be operated by means of stationary operating means 22. As a result thereof, it is possible, in a simple manner, to transfer a cutting 16 from the first device which is denoted in Fig. 2 by reference numerals 27, 28, 29 and 30, respectively.

Up to the moment when it is transferred by gripper 26, the respective cutting 16 is held against the gripper/release head 9 by the gripping fingers 31. At the point in time when a sufficient grip is ensured by means of grippers 26, the fingers 31 are moved apart. This operation may be controlled by means of a control circuit and valves, but it is likewise possible to provide a corresponding valve/slide system in the interior of the shaft 3.

The grippers of the second device or dispensing belts 24 extend as far as above a discharge belt 18. On the latter, trays 20 may be positioned in which there is a large number of plant plugs 21 which may optionally be provided with openings. By operating grips 22, a cutting can be released as a result of which it falls into the respective opening in the respective plant plug in exactly the right position. If desired, it is possible to place the plant in a positively controlled manner in the plant plug. To this end, a placing device with an optionally variable centre-to-centre distance may be used which provides linear support/guidance for the cuttings.

By carrying out the rotating movement in the direction of arrow 7, it is possible to achieve a very high capacity for the rotating shaft provided with arms 4 with gripper/release heads, or the first device, respectively .

In addition, it possible to carry out further treatments with the same arrangement of the assembly illustrated here. To this end, the arms 4 have to be moved in the direction of arrow 7. This makes space available for positioning a number of stations, such as a station for applying an agent which enhances (root) growth on the cuttings. The capacity of the device may be increased further by positioning a number of first devices one behind the other.

With the rotating movement according to the present invention, there is no dead time, as is known for reciprocating devices in the prior art. In addition, it is possible to treat different kinds of plants by means of the device without special adjustments being required.

The second device or dispensing belt 24 rotates in the direction of arrow 32. Downstream of the positioning site of the cuttings, a cutting device 34 with cutting edges 35, 36 is present. In addition, the cutting device can be moved to and fro in the direction of arrow 37. This makes it possible to cut all the cuttings to the same length.

It will be understood that further stations may be arranged along belt 24.

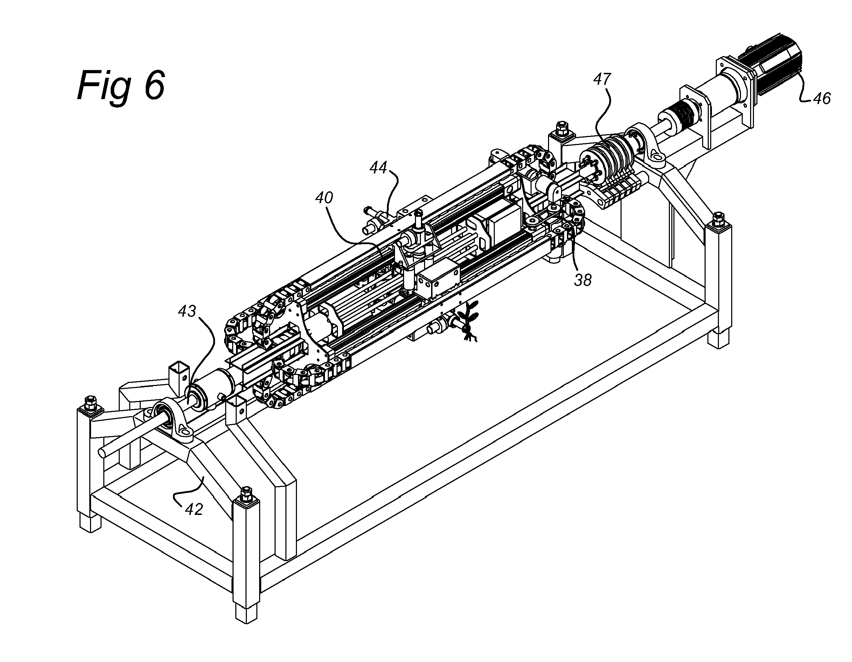

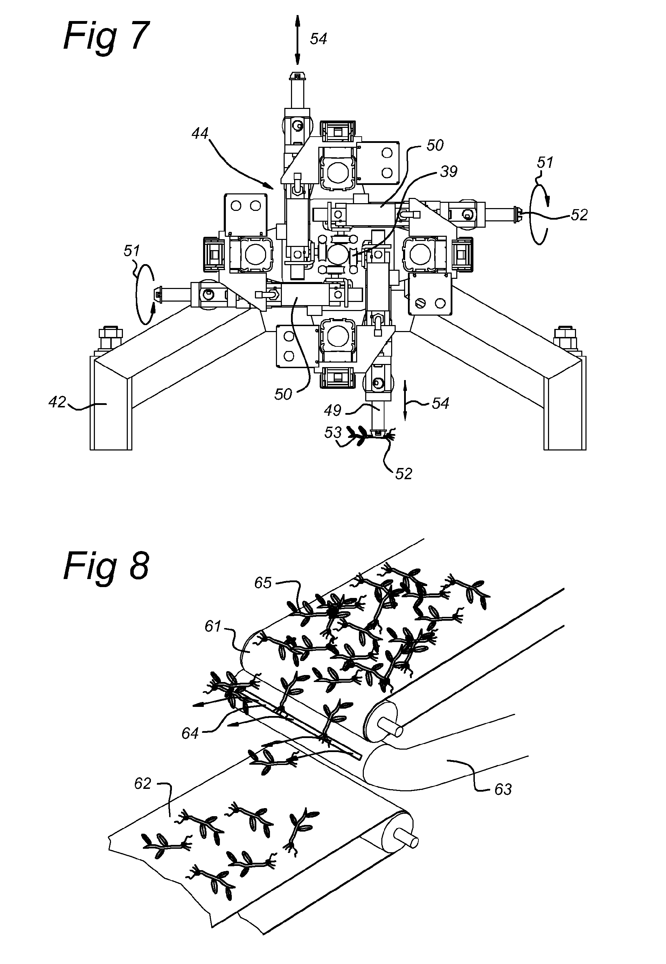

After reading the above, those skilled in the art will immediately be able to think of variants which are within the scope of the attached claims. In Figures 6 and 7, a variant of the device 27-30 from Fig. 2 is shown which is arranged about a shaft so as to be rotatable, just like the embodiment illustrated in the latter figure, and which is denoted by reference numeral 43. All this is accommodated in a frame 42. In this embodiment, the arms 44 are arranged so as to be translatable parallel to this shaft 43. To this end, the arms 44 are displaceable along guide 40. Guiding rollers 39 provide further support. Linear displacement is achieved with motors 38. Four motors 38 are provided, which can be controlled individually, as a result of which each of the arms 4 can be arranged in a different longitudinal position with respect to the shaft 43. A collector 47 is provided in order to transmit control signals and provide power, respectively, during rotation. The joint rotation of the arms 44 is effected with the motor 46.

Each of the arms 44 is provided with a gripper/release head 49 which can be rotated in the direction of arrow 51 with a motor 50. The end of the gripper/release head 49 is provided with a slotted recess 52 for accommodating the plant 53. In a manner which is not shown in any more detail, this accommodating slot 52 may be provided with an air supply/discharge opening so that the plant can be sucked up there and released again, if desired by applying overpressure.

In addition, each of the arms can be displaced in the linear direction according to arrow 54 in order thus to be able to approach the belt surface (not illustrated) and pick up the plant.

Compared to the design illustrated in Figure 1, the device operates in substantially the same manner, albeit that in this case it is necessary to position the plant in an accurately determined position in the width direction of the belt, corresponding to supply conveyor 1 from Fig. 1. However, as a result of the linear movability of the arms 44, the positioning of the plants with respect to one another in the longitudinal direction is less critical.

In addition, it is possible to make this design relatively compact, that is to say, there are few heavy-weight parts at great distance from the shaft 43, as a result of which the centrifugal forces during rotation are limited. With this variant as well, a continuous rotation about the shaft 43 takes place, as a result of which a high processing speed is ensured.

Fig. 8 shows a structure by means of which it is possible to separate plants in a simple manner. It comprises a supply conveyor 61 and a downstream discharge conveyor 62. At the transition between the conveyors 61 and 62, an air supply 63 is provided, which opens into an air gap 64 which extends substantially over the width of the belts 61 and 62. If desired, a shaking chute may be provided between these two belts.

Plants 65, which may be present on the supply conveyor 61 either stuck together or entangled, will be exposed to the effect of the air blowing out of the gap 64 at the transition to the discharge conveyor 62 and, in this manner, plant parts which are stuck to one another will be freed and land on the belt 62 in a distributed manner. Subsequently, separation can be simply carried out in any manner known in the prior art. Preferably, the effective width of belt 61 is smaller and/or the movement speed lower than that of belt 62.

After reading the above, those skilled in the art will immediately be able to think of variants which are within the scope of the attached claims.

## Claims

1. Assembly for placing cuttings (16) in plant plugs (21), comprising a supply (1) for cuttings, a first device (27-30) for gripping the individual cuttings and placing them in a second device (24) for transferring the individual cuttings from the first device and positioning them in a plant plug, **characterized in that** said first device comprises a gripping device which moves only in one direction according to a closed ring.

2. Assembly according to Claim 1, wherein said first device comprises a frame (2) with a gripper/release head (9) which is arranged so as to be rotatable about a centre axis.

3. Assembly according to Claim 2, wherein said gripper/release head (9) comprises a number of gripper/release heads which are arranged in succession in the direction of rotation.

4. Assembly according to one of the preceding claims, comprising a number of first devices (27, 30) which are arranged behind one another in the supply direction of said cuttings.

5. Assembly according to one of the preceding claims, wherein said supply device (1) comprises a device (13) for arranging said cuttings at a regular distance from one another.

6. Assembly according to Claim 5, wherein said device (13) for arranging said cuttings a regular distance apart comprises rotatable arms (14) for picking up and releasing said cuttings.

7. Assembly according to one of the preceding claims, wherein said second device (24) comprises a belt (25) provided with grippers (26).

8. Assembly according to one of the preceding claims, wherein said second device extends above a discharge device (18).

9. Separator for plants (65) comprising a supply conveyor (61), a discharge conveyor (62) arranged downstream of the supply conveyor and a gas-dispensing nozzle (64) arranged at the transition between the supply conveyor and the discharge conveyor, wherein the gas-dispensing nozzle is embodied to blow gas into the transition between supply conveyor and discharge conveyor in the direction of movement of the supply conveyor/discharge conveyor.

10. Separator according to Claim 9, wherein said nozzle comprises an elongate slot, which extends in the width direction of said supply conveyor/discharge conveyor.

11. Separator according to Claim 10, wherein said slot extends over substantially the entire width of said supply conveyor/discharge conveyor.

12. Method for placing cuttings in plant plugs, comprising providing a group of cuttings, conveying said cuttings while increasing the distance between them, gripping individual cuttings, displacing the latter into a position over said plant plugs and placing them in said plant plugs, **characterized in that** gripping and displacing said individual cuttings comprises the gripping of a first cutting and displacing it, with a subsequent cutting being gripped during the displacement of this first cutting.

13. Method according to Claim 12, wherein gripping and displacing said individual cuttings comprises a rotating movement.

14. Method according to Claim 12 or 13, wherein said cutting is a tree cutting.

15. Method for separating plants, comprising arranging the plants on a supply conveyor, and carrying them away by means of a discharge conveyor, which conveyors are arranged in direct succession to one another, and wherein, at the transition between said conveyors, said plants are subjected to a stream of gas, which is directed substantially in the conveying direction of said plants.

16. Method according to Claim 15, wherein said stream of gas comprises a stream of air.

17. Method according to Claim 15 or 16, wherein said stream of gas extends substantially over the entire width of said plants.

18. Method according to one of Claims 15-17, wherein said plants are cuttings.
